(19) Europäisches Patentamt
European Patent Office
Office européen des brevets

(11) **EP 1 277 064 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(21) Anmeldenummer: **01929306.7**

(22) Anmeldetag: **31.03.2001**

(51) Int Cl.:
*G01S 13/72* (2006.01)    *G01S 13/93* (2006.01)

(86) Internationale Anmeldenummer:
**PCT/DE2001/001276**

(87) Internationale Veröffentlichungsnummer:
**WO 2001/079882 (25.10.2001 Gazette 2001/43)**

(54) **VERFAHREN ZUR REGELUNG DER GESCHWINDIGKEIT EINES FAHRZEUGS**

METHOD FOR ADJUSTING THE SPEED OF A MOTOR VEHICLE

PROCEDE DE REGULATION DE LA VITESSE D'UN VEHICULE AUTOMOBILE

(84) Benannte Vertragsstaaten:
**DE FR IT**

(30) Priorität: **14.04.2000 DE 10018556**

(43) Veröffentlichungstag der Anmeldung:
**22.01.2003 Patentblatt 2003/04**

(73) Patentinhaber: **ROBERT BOSCH GMBH**
**70442 Stuttgart (DE)**

(72) Erfinder:
• **WINNER, Hermann**
  **76467 Bietigheim (DE)**
• **LUEDER, Jens**
  **70806 Kornwestheim (DE)**

(56) Entgegenhaltungen:
**DE-A- 4 242 700    DE-C- 19 722 947**
**US-A- 5 402 129**

**Beschreibung**

Stand der Technik

Die Erfindung betrifft ein Verfahren zur Regelung der Geschwindigkeit eines Fahrzeuges, insbesondere unter Einbeziehung von vorausfahrenden Fahrzeugen, nach dem Oberbegriff des Hauptanspruchs.

Es ist aus der DE 42 42 700 A1 bekannt, dass ein Radar- oder Infrarotsensor zur Erfassung der vorausfahrenden Fahrzeuge an einem Fahrzeug angebracht ist. Dieser Radarsensor ist z.B. ein Baustein eines Fahrzeugkomfortsystems ACC (Adaptiv Cruise Control), bei dem ständig Informationen über den Abstand und die Relativgeschwindigkeit des Fahrzeuges zu anderen Fahrzeugen und zu den Straßengegebenheiten verarbeitet werden.

Die Grundfunktionen des oben beschriebenen Systems betreffen die Regelung der Fahrgeschwindigkeit entweder auf eine Sollgröße, hier die Wunschgeschwindigkeit, oder auf die Geschwindigkeit eines vorausfahrenden Fahrzeugs, falls dieses langsamer als die Wunschgeschwindigkeit fährt und sich dieses im Detektionsbereich des Radarsensors befindet. Dieser Sensor kann beispielsweise, wie oben erwähnt, Bestandteil eines Mikrowellenradars oder eines Infrarotlidars sein und misst dazu den Abstand, die Relativgeschwindigkeit und den Winkel von Objekten, insbesondere von vorausfahrenden Fahrzeugen innerhalb des Det-ektionsbereichs.

Aus der DE 197 22 947 C1 ist ein Verfahren bekannt, bei dem zusätzlich zur Messung der zuvor beschriebenen Größen auch der zukünftige Kursverlauf des Fahrzeuges mit dem ACC-System in die Regelung mit einbezogen wird, um den zukünftigen Fahrkorridor zu bestimmen. Hierzu wird der zukünftige Kursbereich wenigstens eines vorausfahrenden Fahrzeuges bestimmt und dann zu allen detektierten Fahrzeugen ein seitlicher Querversatz ermittelt. Bei stationären Krümmungsverhältnissen der Fahrbahn, d.h. in einem Geradenstück oder im Bereich der konstanten Krümmung einer Kurve, lässt sich beim bekannten Verfahren auch leicht mit Hilfe eines gut abgeglichenen Gier- oder Drehratensignals der zukünftige Fahrkorridor bestimmen.

Aus der Gierrate des ACC-Fahrzeugs kann hier mit an sich bekannten Verfahrensschritten die Krümmung der Fahrbahn und damit auch der Kursversatz eines vorausfahrenden Fahrzeugs bestimmt werden. Ist dieser Kursversatz betragsmäßig kleiner als eine vorbestimmte Breite des Fahrkorridors, dann kann darauf geschlossen werden, daß das vorausfahrende Fahrzeug sich im Fahrkorridor des ACC-Fahrzeugs befindet. Bei sich ändernden Verhältnissen, insbesondere im Kurveneingangsbereich, kann jedoch in der Regel die Zugehörigkeit zum Fahrkorridor nicht mehr richtig bestimmt werden, so dass ein auf der rechten Nachbarspur vorausfahrendes Fahrzeug bei einer beginnenden Linkskurve fälschlicherweise zum Fahrkorridor gerechnet werden kann. Dies führt zu störenden Regelreaktionen, wobei die Ursache hier die fehlende Prädiktion der Krümmung ist, da die ermittelte Krümmung immer auf den aktuellen Zeitpunkt bezogen ist und damit zu spät auf eine Krümmungsänderung reagiert wird.

Vorteile der Erfindung

Ein Verfahren zur Regelung der Geschwindigkeit eines Fahrzeuges der eingangs genannten Art, bei dem im zu regelnden Fahrzeug die Gier- oder Drehrate, insbesondere zur Ermittlung der Krümmung der eigenen Fahrtrajektorie, erfasst wird und bei dem mit einem Abstands- oder Positionssensor mindestens ein vorausfahrendes Fahrzeug oder mindestens ein sonstiges Objekt innerhalb eines Sensorerfassungsbereichs, insbesondere hinsichtlich eines Versatzes vom Kurs des zu regelnden Fahrzeugs, detektiert wird, wird erfindungsgemäß mit den kennzeichnenden Merkmalen des Hauptanspruch in vorteilhafter Weise weitergebildet.

Wie schon eingangs erwähnt, kann auf einfache Weise aus der gemessenen Gierrate des zu regelnden ACC-Fahrzeugs mit an sich bekannten Verfahrensschritten die Krümmung k der Fahrbahn errechnet werden, indem die Gierrate durch die Geschwindigkeit geteilt wird, und damit auch der Kursversatz yc eines vorausfahrenden Fahrzeugs bestimmt werden. Im einzelnen kann der Kursversatz yc nach folgender Formel bestimmt werden:

$$yc = yv - k * d^2 / 2,$$

wobei die Größe yv der gemessene Querversatz ohne Berücksichtigung der Krümmung k und d der Abstand zwischen dem zu regelnden Fahrzeug und dem gemessenen vorausfahrenden Fahrzeug sind.

Ist dieser Kursversatz yc betragsmäßig kleiner als eine vorbestimmte Breite $y_{lane}$, dann kann darauf geschlossen werden, daß das Objekt oder das Fahrzeug sich im Fahrkorridor des ACC-Fahrzeugs befindet, wobei $y_{lane}$ etwa einer halben Fahrspurbreite entspricht.

Gemäß der Erfindung wird in vorteilhafter Weise der in vorgegebenen Messzyklen ermittelte Kursversatz yc eines vorausfahrenden Fahrzeugs um eine vorgegebene Zeitspanne verzögert und mit der dann jeweils aktuellen Krümmung k der Fahrtrajektorie des zu regelnden Fahrzeugs ein historischer Kursversatz $yc_{hist}$ ermittelt. Die Verzögerung

kann dabei vorteilhaft so gewählt werden, dass der historische Kursversatz $yc_{hist}$ nach etwa der Hälfte der Strecke zwischen dem zu regelnden Fahrzeug und dem gemessenen Fahrzeug bestimmt wird.

Das erfindungsgemäße Verfahren zur Geschwindigkeitsregelung eines ACC-Fahrzeugs gestattet somit auf einfache Weise alternativ zur für sich gesehen bekannten Vorausschau mittels videobasierender Spurerkennung oder Navigationssystemen einen relativ schnell und einfach durchzuführenden historischen Vergleich zwischen Position und Fahrtrajektorie der Fahrzeuge. Statt einer aufwendigen laufenden Transformation der gemessenen Daten wird erfindungsgemäß vereinfachend der gemessene Quersatz yv um etwa die Zeitspanne $t_{hist}$, entsprechend der halben Zeitspanne zwischen den Fahrzeugen verzögert.

Aus diesem so verzögerten Wert $yv_{hist}$ wird nun wie oben mit der aktuellen Krümmung k der sogenannte historische Kursversatz $yc_{hist}$ nach der Beziehung

$$yc_{hist} = yv_{hist} - k*d_{hist}^2/2$$

ermittelt, wobei $d_{hist}$ als historischer Abstand zwischen dem zu regelnden Fahrzeug und dem gemessenen Fahrzeug ebenfalls durch eine Verzögerung gebildet oder geschätzt wird. Beispielsweise nach der Beziehung

$$d_{hist} = d_{aktuell} - vr*t_{hist} .$$

Der Abstand $d_{hist}$ berücksichtigt damit die Änderung des Abstands bei Geschwindigkeitsunterschieden. Anschaulich wirkt der Mechanismus.wie folgt: die Krümmungsbestimmung erfolgt bildlich gesehen etwa auf der Mitte der Strecke zwischen dem ACC-Fahrzeug und dem gemessenem Objekt, allerdings um $t_{hist}$ verspätet. Auch bei sich ändernden Krümmungen ist die mittlere Krümmung hier eine gute Schätzung und erlaubt eine recht präzise Kursversatzbestimmung.

Zur Vermeidung von unerwünschten Einschwingeffekten in den Fällen, in denen das Objekt noch nicht die Zeitspanne $t_{hist}$ lang gemessen wurde und damit keine historischen Querversätze vorliegen ist es vorteilhaft, wenn eine dynamisch wachsende Verzögerungszeit $t_{hist/dyn}$ an die Stelle von der Zeit $t_{hist}$ tritt, wobei die Zeitspanne bis zum Erreichen des Maximalwertes $t_{hist}$ um den mit der Beobachtungsdauer wachsenden dynamischen Anteil ergänzt wird. Bis zum Erreichen dieses Maximalwertes ist zwar die Qualität des so berechenbaren $yc_{hist}$ etwas geringer, aber dieser Wert steht als Übergangswert immer bereit.

Weiterhin ist eine Filterung zum Ausgleich kurzzeitiger Krümmungsschwankungen durch Lenkbewegung oder des Signalrauschens vorteilhaft. Da diese Filterung das aktuelle Signal ebenfalls um $t_{filter}$ verzögert, muss die Verzögerung der yv-Werte ebenfalls um etwa diesen Wert länger dauern. Eine weitere Modifikation der Verzögerung kann z.B. in vorteilhafter Weise durch Filterzeiten des aktuellen Krümmungssignals k vorgenommen werden. Hierbei wird der jeweils aktuelle Wert für die Krümmung k der Fahrtrajektorie des zu regelnden Fahrzeugs zu Mittelungszwecken um einen vorgegebenen Wert verzögert, wobei diese Verzögerung bei der Ermittlung des historischen Kursversatzes $yc_{hist}$ mit berücksichtigt wird.

Obwohl die verzögerungszeiten bekannt sind, so dass $t_{hist}$ aus Summe der halben Zeitlücke und der Filterzeit gebildet wird, können solche Modifikation der Zeitspanne $t_{hist}$ sinnvoll sein, um mit einem Gesamtabgleich ein Funktionsoptimum zu erzielen. Insbesondere gilt dies, wenn die Größen nicht nur durch ein Verzögerungsglied gefiltert werden, sondern noch über tiefpassähnliche Filter gemittelt werden. Letzteres dient auch hier der Reduktion von Messfluktuationen. Eine Kombination aus Verzögerungsglied und Mittelungsfilter lässt sich beispielsweise auf einfache Weise mit Hilfe von Filtern möglichst konstanter Gruppenlaufzeit bilden, z.B. Besselfilter oder nacheinander geschaltete Filter mit einer kritischen Dämpfung.

Zusammenfassend lässt sich feststellen, dass mit dem erfindungsgemäßen Verfahren eine einfache Bildung der historischen Kursversätze, insbesondere durch eine Kombination von Mittelung und Verzögerung, ohne eine aufwendige Speicherung der Spurdaten und ohne eine Transformation von solchen gespeicherten Daten vornehmen lässt. Es wird ein schnelles Ergebnis erzielt, da nur etwa die halbe Zeitlücke bis zum Ergebnis gewartet werden muss.

Um ein noch verbessertes Verfahren zur Prädiktion des Kursverlaufes des zu regelnden Fahrzeugs zu erhalten, ist es auch möglich, dass im zu regelnden Fahrzeug eine Anzahl weiterer Detektionseinrichtung zur Bestimmung der Kursversätze der vorausfahrenden Objekte vorhanden sind. Alle Ergebnisse dieser Detektionseinrichtungen können dann ausgewertet und gewichtet werden. Die Auswertung und Gewichtung kann bevorzugt mittels einer Videokamera, einem vorzugsweise satellitengestützten Navigationssystem, einer Anordnung zur Auswertung von Standzielen oder einer Anordnung zur Ermittlung einer kollektiven Gier- oder Drehrate der vorausfahrenden Objekte durchgeführt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Zeichnung

Das erfindungsgemäße Verfahren zur Regelung der Geschwindigkeit eines Fahrzeuges unter Einbeziehung vorausfahrender Objekte wird anhand der Zeichnung erläutert.

Es zeigen:

Figur 1 eine Skizze eines gekrümmten Fahrbahnverlaufs mit einem in seiner Geschwindigkeit zu regelnden Fahrzeug und weiteren Objekten;

Figur 2 eine Skizze eines gekrümmten Fahrbahnverlaufs mit einem in seiner Geschwindigkeit zu regelnden Fahrzeug und weiteren Objekten zu verschiedenen Zeitpunkten;

Figur 3 ein Diagramm des Ausgangssignals eines eine Verzögerung bewirkenden Filters;

Figur 4 ein Prinzipschaltbild einer Spurwahrscheinlichkeit der sich in einem Fahrkorridor befindenden Objekte;

Figur 5 ein Diagramm zur Bewertung der verschiedenen Spurwahrscheinlichkeiten und

Figur 6 ein Blockschaltbild betreffend die Auswertung und Gewichtung verschiedener Detektionsmethoden bei der Erfassung von vorausfahrenden Objekten.

Beschreibung des Ausführungsbeispiels

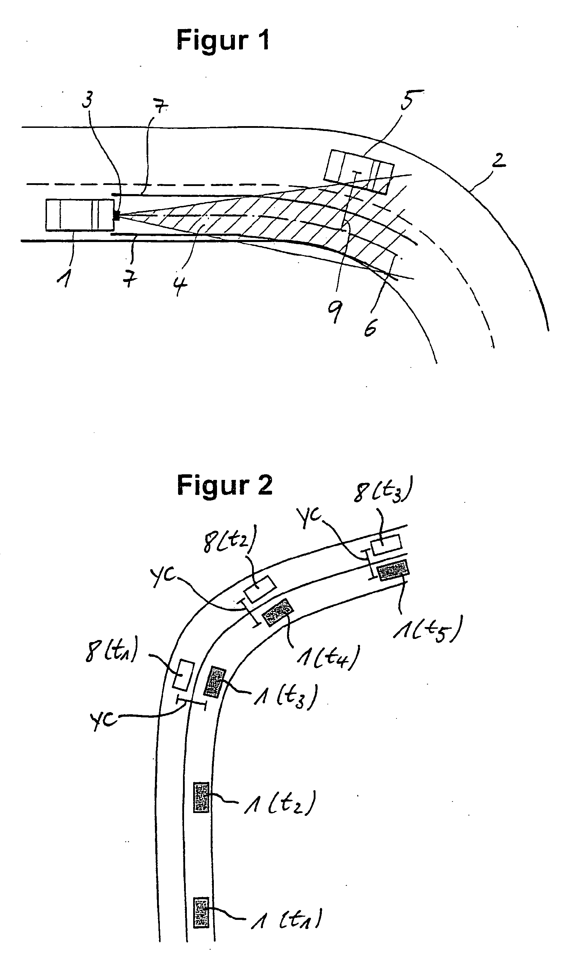

In Figur 1 ist ein zu regelndes ACC-Fahrzeug 1 gezeigt, dass sich auf einer Fahrbahn 2 mit mehreren Fahrspuren bewegt. Das Fahrzeug 1 weist z.B. einen Radarsensor 3 mit einem Radardetektionsbereich 4 auf; am Fahrzeug 1 sind auch noch weitere Detektionsanordnungen anbringbar, wie z.B. Video- oder Navigationseinrichtungen, mit denen die Fahrbahn 2 oder das Fahrbahnumfeld erfasst werden kann. Auf der Fahrbahn 2 befindet sich ein Fahrzeug 5 als ein vorausfahrendes Objekt, wobei in der Realität eine Mehrzahl solcher Objekte in verschiedenen Abständen und unterschiedlichen Geschwindigkeiten vorhanden sind.

Das ACC-System im Fahrzeug 1 beinhaltet eine hier nicht näher erläuterte Regelanordnung zur Beeinflussung der Geschwindigkeit und eine Vielzahl von Sensoren, wie z.B. einen Gier- oder Drehratensensor, einen Lenkwinkelsensor, Raddrehzahlsensoren oder einen Querbeschleunigungssensor. Eine strichpunktierte Linie 6 stellt den zukünftigen gewollten Kursverlauf, bzw. die Fahrtrajektorie des Fahrzeugs 1 dar und die beiden Linien 7 zeigen den zukünftigen Kursbereich bzw. Fahrkorridor. Mit einer Strecke 9 ist der seitliche Quer- oder Kursversatz des vorausfahrenden Fahrzeugs 5 zum Fahrverlauf des Fahrzeugs 1 angegeben.

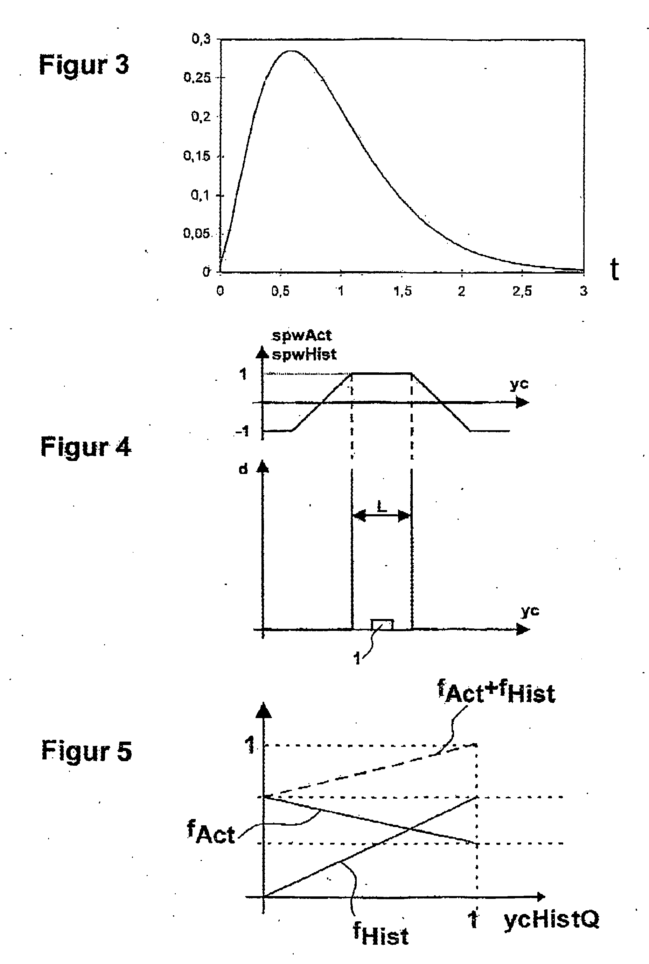

Im folgenden soll mit Bezug auf Figur 2 und 3 davon ausgegangen werden, dass zur Korrektur der Krümmung der eigenen Fahrtrajektorie 6 des Fahrzeugs 1 im Hinblick auf eine zu erwartende Krümmung der Fahrbahn 2 ein historischer Kurs- oder Lateralversatz in der Berechnung verwendet wird.

Gemäß des in der Zeichnung dargestellten Ausführungsbeispiels wird der in vorgegebenen Messzyklen ermittelte Kursversatz $yc$ eines vorausfahrenden Fahrzeugs 8 um eine vorgegebene Zeitspanne verzögert und mit der dann jeweils aktuellen Krümmung k in Zeitpunkten $t_1$, $t_2$ und $t_3$ der Fahrtrajektorie 6 ein historischer Kursversatz $yc_{hist}$ ermittelt. Die Verzögerung kann dabei vorteilhaft so gewählt werden, dass der historische Kursversatz $yc_{hist}$ in etwa auf der Hälfte der Strecke zwischen dem zu regelnden Fahrzeug 1 und dem gemessenen Fahrzeug 5 bestimmt wird.

Aus diesem so verzögerten Wert $yv_{hist}$ wird nun wie oben mit der aktuellen Krümmung k der sogenannte historische Kursversatz $yc_{hist}$ nach der Beziehung

$$yc_{hist} = yv_{hist} - k*d_{hist}^2/2$$

ermittelt.

Figur 3 zeigt ein Diagramm des Ausgangssignals eines eine Verzögerung bewirkenden Filters. Auf der horizontalen Achse ist die Zeit in Sekunden dargestellt und auf der Senkrechten ist einheitslos/prinzipiell der Verlauf eines Ausgangssignals dargestellt. Der gezeigte beispielhafte Verlauf zeigt ein Maximum des Ausgangssignals im Bereich von ca. 0,8 Sekunden. Dieses Maxima muss entsprechend der gewünschten Verzögerung angepaßt werden.

Nachfolgend soll eine Berechnungsmethode beschrieben werden mit der die zuvor beschriebene Berechnung unter Einbeziehung des historischen Kursversatz $yc_{hist}$ zur Kursprädiktion durchgeführt werden kann. Die gewählten Abkürzungen stellen die für die Eingabe in ein Datenverarbeitungssystem gängigen Kurzformen der entsprechend physikalischen Größen dar. Die Trajektorie wird hierbei vereinfacht als stückweise konstante Parabel angenommen. Die Parabelkrümmung wird ungefähr in der Mitte des Teilstücks zwischen Objekt 5 und Fahrzeug 1 (vgl. Figur 2) bestimmt. Da die Bestimmung des nunmehr einzigen Trajektorienkoeffizienten schon bei Erreichen der Mitte erfolgt, ist eine Verzögerung der Objektlateralversätze yv auch nur bis zur Mitte erforderlich. Die zeitliche Verzögerung wird beispielsweise durch einen hier nicht dargestellten dreifach kaskadierten Tiefpass mit dynamischer Zeitkonstante Tauy zur Verbesserung des Einschwingverhaltens erzielt. Es gelten hier folgende Beziehungen:

$$\mathtt{Tauy(t_j) = MIN(TauyMax(t_j), TauyMax(t_{j-1})+T_{cycle});}$$

falls für das Objekt ein gültiger Messwert vorliegt, sonst ergibt sich,

$$\mathtt{Tauy(t_j) = MAX(0,TauyMax(t_{j-1})-T_{cycle}/2)}$$

mit

$$\mathtt{Tauy(t_j)MAX = fTauyd * (d(t_j)/vRef(t_j)) + fTauyKap * TauKap.}$$

Die Filterung mittels der drei Tiefpassstufen ergibt eine gesamte Gruppenlaufzeit von $3Tauy(t_j)$. Somit erhält man in drei Messzyklen folgende Lateralversätze:

$$\mathtt{yv1(t_j) = (T_{cycle}/Tauy(t_j) * (yv(t_j) - yv1(t_{j-1})),}$$

$$\mathtt{yv2(t_j) = (T_{cycle}/Tauy(t_j) * (yv1(t_j) - yv2(t_{j-1})),}$$

$$\mathtt{yv3(tj) = (Tcycle/Tauy(tj) * (yv2(tj) - yv3(tj-1)),}$$

Aus dem Ausgangswert $yv3(t_j)$ des Filters lässt sich mit Hilfe der Trajektorienkrümmung $k_{Traj}(t_j)$ (vorher der Wert = k) der historische Lateralversatz zur Kursmitte wie folgt berechnen:

$$\mathtt{ycHist(t_j) = yv3(t_j) - k_{Traj} *(d(t_j)-vr(t_j)* 3TauDy(t_j))^2/2.}$$

Hierbei korrigiert $vr(t_j) * 3Tauy(t_j)$ den aktuellen Abstand zum historischen Bezugspunkt tj - 3Tauy(tj).

Als weitere Kenngröße für die Qualität des Historischen Lateralversatzes dient die Größe ycHistQ; sie berechnet sich aus der Winkelgüte Qalpha (z.B. = 1) und der Beobachtungsdauer für die Berechnung des historischen Lateralversatzes:

$$ycHistQ(t_j) = MIN(1, \; ycHistQ(t_{j-1}) + Qalpha \; * \; T_{cycle}/TauHist(t_j)) \; bzw.$$

$$TauHist(t_j) = fTauHist \; * \; (d(t_j) / \; v_{Ref}(t_j) \; ),$$

falls ein Objekt gemessen wurde und ein gültiger Kursversatz vorliegt. Die Größe fTauHist steht hier für den Anteil der Zeitlücke, ab dem ein eingeschwungenes Verhalten angenommen wird. Sonst gilt:

$$ycHistQ(t_j) = MIN(0, \; ycHistQ(t_{j-1}) \; - \; T_{cycle}/TauHist(t_j)).$$

Da der historische Lateralversatz erst nach einer längeren Wartezeit in hinreichender Qualität vorliegt, wird auf Basis des aktuellen Lateralversatzes yv und der aktuellen Kurskrümmung ein aktueller Kursversatz $yc_{Act}$ bestimmt, der schon mit ersten Messung eines Objekts einen lateral Kursversatz liefern kann:

$$yc_{Act} = yv - yv_{Course} = yv - d^2 \; * \; k_{Course}/2.$$

In Figur 4 ist ein Schaubild zur Verdeutlichung der Spurwahrscheinlichkeit der gemessenen Objekte gezeigt, wobei die aktuelle Spurwahrscheinlichkeit spwAct und die historische Spruwahrscheinlichkeut spwHist parallel für den aktuellen Lateralversatz $yc_{Act}$ und den historischen Lateralversatz $yc_{Hist}$ in gleicher Weise erfolgt.

Basis der zuvor erwähnten Spurwahrscheinlichkeitsbestimmung ist, wie aus der Figur 4 ersichtlich, eine Fläche, die die konstante Breite L aufweist. Innerhalb dieser Fläche wird eine positive Spurwahrscheinlichkeit vergeben, während außerhalb diese negativ wird. Die höchste Wahrscheinlichkeit wird vergeben, wenn yc sich innerhalb der inneren Fläche befindet.

Ähnlich der an sich bekannten Fuzzy-Logik kann der Übergangsbereich unscharf gewählt werden, so dass eine Spurwahrscheinlichkeit von -1 bis + 1 ermittelt werden kann. Die Breite des Übergangsbereichs spw nimmt vorteilhafter Weise bei großem Abstand zu.

In einem Diagramm nach Figur 5 ist eine Mischung der beschriebenen Spurwahrscheinlichkeiten gezeigt. Die beiden Spurwahrscheinlichkeiten spwAct und spwHist werden in Abhängigkeit von der Qualität des historischen Lateralversatzes ycHistQ in der Zeit Tauy gewichtet und zu einem neuen Wert spw gemischt. Die Gewichtungsfaktoren $f_{Act}$ und $f_{act}+f_{Hist}$ aus dem Diagramm nach der Figur 5 werden wie folgt gebildet. $f_{Hist}$ für ycHistQ ist groß falls die Beobachtungszeit etwa TauyMax entspricht. $f_{Act}$ kann konstant sein oder anderweitig bestimmt werden.

Zeigen hierbei $yc_{Act}$ und $yc_{Hist}$ auf verschiedene Fahrspuren, so kompensieren sich die Werte entsprechend der Gewichte $f_{Act}$ und $f_{Hist}$. Liegen sie dagegen auf der gleicher Fahrspur, so verstärken sie sich bis zum Maximalwert $f_{Act} + f_{Hist}$.

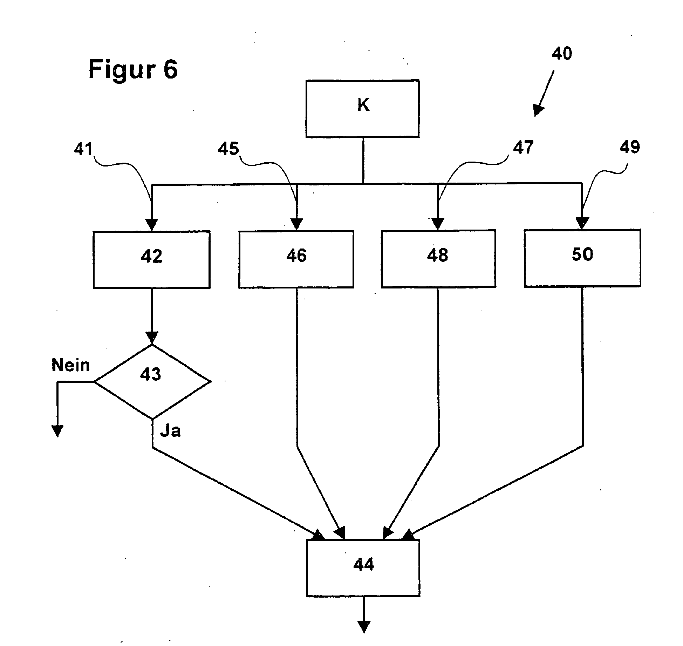

In Figur 6 ist ein Blockschaltbild 40 gezeigt, dass verschiedene Möglichkeiten zur Erfassung und Auswertung von Objekten im Kursverlauf k eines ACC-Fahrzeugs zeigt, die auch in unterschiedlichen Kombinationen, einzeln oder zusammen angewandt werden können. Im linken Zweig 41 ist eine Berechnung eines zukünftigen Kursverlaufs durch Addition der eigenen Trajektion aus der eigenen Gierrate mit einer kollektiven Gierrate in einem Block 42 dargestellt. In einem Block 43 kann nun unter Hinzuziehung der aktuellen Objektdaten eine Entscheidung darüber gefällt werden, ob ein detektiertes Fahrzeug sich im eigenen berechneten Fahrkorridor befindet und folglich als ein Objekt an das die eigene Geschwindigkeit angepasst werden soll in Frage kommt. Falls dies bejaht wird kann dann in einer Regelanordnung 44 die eigentliche Regelung durchgeführt.

In einem parallelen Zweig 45 soll hier ein Videosystem 46 vorhanden sein, mit dem ebenfalls eine Definition des eigenen Fahrkorridors und eine Erfassung eines vorausfahrenden Objekts als Regelobjekt erfolgen kann.

In einem weiteren Zweig 47 ist weiterhin ein Navigationssystem 48 vorhanden, dass mit Kenntnis des eigenen. Standortes und unter Berüaksichtigung von vorhandenem Kartenmaterial die gleichen Regelmechenismen wie zuvor beschrieben bewirken kann.

Mit einem weiteren Zweig 49 kann in einem Baustein 50 eine Kursprädiktion des ACC-Fahrzeugs 1 vorgenommen werden, die bei der Berechnung den zuvor beschriebenen historischen Lateralversatz zwischen dem ACC-Fahrzeug 1 und einem erfassten objekt (Fahrzeug 5, 8) berücksichtigt.

In einem anderen parallelen Zweig kann hier noch in einem Baustein eine Kursbestimmung Mittels eines durch die Interpretation der Position von Standzielen, beispielsweise am Fahrbahnrand, ermittelten Kursversatzes durchgeführt werden.

Im der eigentlichen Regelanordnung 44 kann nun unter Auswertung der Ergebnisse aus den Berechnungen der einzelnen Zweige 41, 45, 47, 49 eine endgültige Entscheidung über die Auswahl des vorausfahrenden Fahrzeugs gewählt werden, ggf, mit einer Gewichtung der Einzelergebnisse, an das das ACC-Fahrzeug seine Geschwindigkeit anpasst.

## Patentansprüche

1. Verfahren zur Regelung der Geschwindigkeit eines Fahrzeugs (1) entweder auf eine Wunschgeschwindigkeit oder auf die Geschwindigkeit eines vorausfahrenden Fahrzeugs (8), falls dieses langsamer als die Wunschgeschwindigkeit fährt und sich innerhalb eines sich entlang einer Fahrtrajektorie (6) erstreckenden Fahrkorridors (7) des zu regelnden Fahrzeugs (1) befindet, bei welchem Verfahren

   - im zu regelnden Fahrzeug (1) die Gierrate zur Ermittlung der Krümmung (k) einer eigenen Fahrtrajektorie (6) erfasst wird,
   - ein Versatz (yv) des vorausfahrenden Fahrzeugs (5, 8) vom momentanen Kurs des zu regelnden Fahrzeugs (1) gemessen wird, und
   - aus der Krümmung (k) und dem gemessenen Versatz (yv) ein Kursversatz (yc) des vorausfahrenden Fahrzeugs (5, 8) zur Fahrtrajektorie (6) des zu regelnden Fahrzeugs (1) bestimmt wird, wobei
   - sich das vorausfahrende Fahrzeug (5, 8) innerhalb des Fahrkorridors (7) des zu regelnden Fahrzeugs (1) befindet, wenn der Kursversatz (yc) kleiner ist, als eine vorbestimmte Breite des Fahrkorridors (7),

   dadurch gekennzeichnet, dass zur Bestimmung, ob sich das vorausfahrende Fahrzeug (5, 8) innerhalb des Fahrkorridors (7) des zu regelnden Fahrzeugs (1) befindet, oder nicht, der in vorgegebenen Messzyklen gemessene Versatz (yv) verzögert, und mit der dann jeweils aktuellen Krümmung (k) ein historischer Kursversatz ($yc_{hist}$) des vorausfahrenden Fahrzeugs (5, 8) ermittelt wird, der dann mit der Breite des Fahrkorridors (7) verglichen wird.

2. Verfahren nach Anspruch 1, dadurch gekennzeichnet, dass die Verzögerung so gewählt ist, dass der historische Kursversatz ($yc_{hist}$) nach etwa der Hälfte der Strecke zwischen dem zu regelnden Fahrzeug (1) und dem gemessenen Fahrzeug (5,8) bestimmt wird.

3. Verfahren nach Anspruch 1 oder 2, dadurch gekennzeichnet, dass der historische Kursversatz ($yc_{hist}$) nach der Beziehung $yc_{hist} = yv_{hist} - k \cdot d_{hist}^2/2$ ermittelt wird, wobei $d_{hist}$ als historischer Abstand zwischen dem zu regelnden Fahrzeug (1) und dem gemessenen Fahrzeug (5,8) ebenfalls durch eine Verzögerung gebildet oder geschätzt wird.

4. Verfahren nach Anspruch 3, dadurch gekennzeichnet, dass der historische Abstand ($d_{hist}$) nach der Beziehung $d_{hist} = d_{aktuell} - vr \cdot t_{hist}$ geschätzt wird.

5. Verfahren nach Anspruch 2 oder 3, dadurch gekennzeichnet, dass die Zeitspanne bis zum Erreichen des Maximalwertes ($t_{hist}$) um einen mit der Beobachtungsdauer wachsenden Anteil zu ($t_{hist/dyn}$) ergänzt wird.

6. Verfahren nach einem der vorhergehenden Ansprüche, dadurch gekennzeichnet, dass der jeweils aktuelle Wert für die Krümmung (k) der Fahrtrajektorie des zu regelnden Fahrzeugs (1) um einen vorgegebenen Wert verzögert wird, wobei diese Verzögerung bei der Ermittlung des historischen Kursversatzes ($y_{chist}$) mit berücksichtigt wird.

7. Verfahren nach einem der vorhergehenden Ansprüche, dadurch gekennzeichnet, dass jeweils für den aktuellen ($yc_{Act}$) und den historischen Kursversatz ($yc_{hist}$) eine Spurwahrscheinlichkeit (spwAct,spwHist) des gemessenen Fahrzeugs (5,8) für die eigene Fahrspur und/oder für die Nebenspuren (spwL,spwR) des zu regelnden Fahrzeugs (1) ermittelt werden.

8. Verfahren nach Anspruch 7, **dadurch gekennzeichnet, dass** die beiden Spurwahrscheinlichkeiten (spwAct, spwHist) in Abhängigkeit von der Qualität des historischen Lateral- oder Kursversatzes ($yc_{hist}$) zu einem neuen Wert (spw) gemischt werden.

9. Verfahren nach einem der vorhergehenden Ansprüche, **dadurch gekennzeichnet, dass** im zu regelnden Fahrzeug (1) eine Anzahl weiterer Detektionseinrichtungen (41,45,47,49,51) zur Erfassung der Position der vorausfahrenden Objekte (5) vorhanden sind und dass zur Auswahl eines vorausfahrenden Objekts (5,8) als das Fahrzeug, an das die Geschwindigkeit des zu regelnden Fahrzeugs angepasst werden soll, alle Ergebnisse dieser Detektionseinrichtungen (41,45,47,49,51) ausgewertet und gewichtet werden.

10. Verfahren nach Anspruch 9, **dadurch gekennzeichnet, dass** die Auswertung und Gewichtung mit einer Videokamera, einem vorzugsweise satellitengestützten Navigationssystem, einer Anordnung zur Auswertung von Standzielen oder einer Anordnung zur Ermittlung einer kollektiven Gierrate von vorausfahrenden Objekten (5,8) durchgeführt wird.

## Claims

1. Method for adjusting the speed of a vehicle (1) either to a desired speed or to the speed of a vehicle (8) travelling ahead if said vehicle (8) is travelling more slowly than the desired speed and is located within a travel corridor (7) of the vehicle (1) to be adjusted which extends along a travel trajectory (6), in which method

    - in the vehicle (1) to be adjusted, the yaw rate is sensed in order to acquire the curvature (k) of its own travel trajectory (6),
    - an offset (yv) of the vehicle (5, 8) travelling ahead from the instantaneous course of the vehicle (1) to be adjusted is measured, and
    - a course offset (yc) of the vehicle (5, 8) travelling ahead with respect to the travel trajectory (6) of the vehicle (1) to be adjusted is determined from the curvature (k) and the measured offset (yv), wherein
    - the vehicle (5, 8) travelling ahead is located within the travel corridor (7) of the vehicle (1) to be adjusted if the course offset (yc) is smaller than a predetermined width of the travel corridor (7),

    **characterized in that**, in order to determine whether or not the vehicle (5, 8) travelling ahead is located within the travel corridor (7) of the vehicle (1) to be adjusted, the offset (yv) which is measured in predefined measuring cycles is delayed and the then respectively current curvature (k) is used to acquire an historical course offset ($yc_{hist}$) of the vehicle (5, 8) travelling ahead, and said historical course offset is then compared with the width of the travel corridor (7).

2. Method according to Claim 1, **characterized in that** the delay is selected in such a way that the historical course offset ($yc_{hist}$) is determined according to approximately half the distance between the vehicle (1) to be adjusted and the measured vehicle (5, 8).

3. Method according to Claim 1 or 2, **characterized in that** the historical course offset ($yc_{hist}$) is acquired according to the relationship $yc_{hist} = yv_{hist} - k*d_{hist}^2/2$, where $d_{hist}$ is also formed or estimated by means of a delay, as a historical distance between the vehicle (1) to be adjusted and the measured vehicle (5, 8).

4. Method according to Claim 3, **characterized in that** the historical distance ($d_{hist}$) is estimated according to the relationship $d_{hist} = dcurrent - vr*t_{hist}$.

5. Method according to Claim 2 or 3, **characterized in that** a component which increases with the duration of observation is added to the time period up to the attainment of the maximum value ($t_{hist}$) to form ($t_{hist/dyn}$).

6. Method according to one of the preceding claims, **characterized in that** the respective current value for the curvature (k) of the travel trajectory of the vehicle (1) to be adjusted is delayed by a predefined value, wherein this delay is also taken into account in the acquisition of the historical course offset (schist).

7. Method according to one of the preceding claims, **characterized in that** a lane probability (spwAct, spwHist) of the measured vehicle (5, 8) for the vehicle's own lane and/or a lane probability (spwAct, spwHist) for the adjacent lanes (spwL, spwR) of the vehicle (1) to be adjusted are respectively acquired for the current course offset ($yc_{Act}$) and the historical course offset ($yc_{hiht}$).

8. Method according to Claim 7, **characterized in that** the two lane probabilities (spwAct, spwHist) are mixed as a function of the quality of the historical lateral or course offset ($yc_{hist}$) to form a new value (spw).

9. Method according to one of the preceding claims, **characterized in that** a number of further detection devices (41, 45, 47, 49, 51) for sensing the position of the objects (5) travelling ahead are present in the vehicle (1) to be adjusted, and **in that**, in order to select an object (5, 8) travelling ahead as the vehicle to which the speed of the vehicle to be adjusted is to be adapted, all the results of these detection devices (41, 45, 47, 49, 51) are evaluated and weighted.

10. Method according to Claim 9, **characterized in that** the evaluation and weighting are carried out with a video camera, a preferably satellite-supported navigation system, an arrangement for evaluating stationary targets or an arrangement for acquiring any collective yaw rate of objects (5, 8) travelling ahead.

**Revendications**

1. Procédé de régulation de la vitesse d'un véhicule (1) soit à une vitesse souhaitée soit à la vitesse d'un véhicule (8) qui le précède au cas où ce dernier se déplace plus lentement que la vitesse souhaitée et est situé à l'intérieur d'un corridor de conduite (7) du véhicule à réguler (1) le long d'une trajectoire de conduite (6), et dans lequel :

   - la vitesse de lacet du véhicule (1) à réguler est détectée pour déterminer la courbure (k) de la trajectoire de conduite propre (6),
   - un décalage (yv) entre le véhicule qui précède (5, 8) et la course instantanée du véhicule (1) à réguler est mesuré et
   - à partir de la courbure (k) et du décalage (yv) mesuré, un décalage de course (yc) du véhicule qui précède (5, 8) par rapport à la trajectoire de conduite (6) du véhicule (1) à réguler est déterminé,
   - le véhicule (5, 8) qui précède étant situé à l'intérieur du corridor de conduite (7) du véhicule (1) à réguler lorsque le décalage de course (yc) est inférieur à une largeur prédéterminée du corridor de conduite (7),

   **caractérisé en ce que**
   pour déterminer si le véhicule qui précède (5, 8) est situé ou non à l'intérieur du corridor de conduite (7) du véhicule (1) à réguler, le décalage (yv) mesuré dans des cycles de mesure précédents est retardé et à l'aide de la courbure instantanée (k) à cet instant, un historique ($yc_{hist}$) du décalage de course du véhicule (5, 8) qui précède est déterminé et est ensuite comparé à la largeur du corridor de conduite (7).

2. Procédé selon la revendication 1, **caractérisé en ce que** le retard est sélectionné de telle sorte que l'historique du décalage de course ($yc_{hist}$) est déterminé après environ la moitié de la distance qui sépare le véhicule (1) à réguler et le véhicule (5, 8) mesuré.

3. Procédé selon les revendications 1 ou 2, **caractérisé en ce que** l'historique du décalage de course ($yc_{hist}$) est déterminé par l'équation $Yc_{hist} = Yv_{hist} - k*d_{hist}^2/2$, dans laquelle $d_{hist}$, qui est l'historique de la distance entre le véhicule (1) à réguler et le véhicule (5, 8) mesuré, est également formé ou estimé par un retard.

4. Procédé selon la revendication 3, **caractérisé en ce que** l'historique de distance ($d_{hist}$) est estimé par l'équation $d_{hist} = d_{aktuell} - vr*t_{hist}$.

5. Procédé selon les revendications 2 ou 3, **caractérisé en ce que** le temps qui s'écoule jusqu'à ce que la valeur maximale ($t_{hist}$) soit atteinte est complété d'une portion qui augmente avec la durée d'observation pour former ($t_{hist/dyn}$).

6. Procédé selon l'une des revendications précédentes, **caractérisé en ce que** la valeur instantanée de la courbure (k) de la trajectoire de conduite du véhicule (1) à réguler est retardée d'une valeur prédéterminée, ce retard étant pris en compte dans la détermination de l'historique du décalage de course ($yc_{hist}$).

7. Procédé selon l'une des revendications précédentes, **caractérisé en ce que** pour le décalage de course instantané ($Yc_{Act}$) et l'historique de décalage de course ($Yc_{hist}$), une probabilité de trace (pswAct, spwHist) du véhicule (5, 8) mesurée sur sa propre trajectoire de conduite et/ou pour les trajectoires latérales (spwL, spwR) du véhicule (1) à réguler est déterminée.

8. Procédé selon la revendication 7, **caractérisé en ce que** les deux probabilités de trajectoire (spwAct, spwHist) sont mélangées pour former une nouvelle valeur (spw) qui est fonction de la qualité de l'historique du décalage latéral ou du décalage de course ($yc_{hist}$).

9. Procédé selon l'une des revendications précédentes, **caractérisé en ce que** d'autres dispositifs de détection (41, 45, 47, 49, 51) permettant de détecter la position d'objets (5) se déplaçant à l'avant sont prévus dans le véhicule (1) à réguler et **en ce que** les résultats de tous ces dispositifs de détection (41, 45, 47, 49, 51) sont évalués et pondérés pour sélectionner un objet (5, 8) se déplaçant à l'avant comme étant le véhicule à la vitesse duquel le véhicule à réguler doit adapter sa vitesse.

10. Procédé selon la revendication 9, **caractérisé en ce que** l'évaluation et la pondération sont réalisées à l'aide d'une caméra vidéo, d'un système de navigation de préférence assisté par satellite, d'un système d'évaluation des destinations ou d'un système e détermination d'une vitesse de lacet collective des objets (5, 8) se déplaçant à l'avant.

# Figur 1

# Figur 2

**Figur 3**

**Figur 4**

**Figur 5**

## Figur 6

40

K

41    45    47    49

42    46    48    50

Nein    43

Ja

44

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4242700 A1

- DE 19722947 C1